# EUROPEAN PATENT SPECIFICATION

(11) **EP 2 085 302 B1**
(45) Date of publication and mention of the grant of the patent: **26.01.2011**
(21) Application number: 08156924.6
(22) Date of filing: 26.05.2008
(51) Int. Cl.: B62J 1/00

(54) **Saddle assembly and venting device thereof**
Sattelanordnung und Belüftungsvorrichtung dafür
Selle et dispositif d'aération de celle-ci

(30) Priority: 30.01.2008 TW 97103453; 24.04.2008 TW 97115042
(43) Date of publication of application: 05.08.2009
(73) Proprietor: International Bicycle Products Corporation, Taichung Hsien (TW)
(72) Inventor: Yu, Tsai-Yun, Taichung Hsien (TW); Huang, Wei-Min, Banqiao City (TW)
(74) Representative: Becker Kurig Straus

(56) References cited:
- EP-A- 2 052 956
- WO-A-02/12055
- JP-A- 2001 171 574
- US-A- 1 271 375
- US-A- 4 313 640
- US-A- 5 356 205

## Description

### CROSS-REFERENCES TO RELATED APPLICATIONS

Not applicable.

### BACKGROUND OF THE INVENTION

### Field of the Invention

The present invention relates to to a venting device for a saddle assembly for a bicycle and the saddle assembly for a bicycle comprising said venting device.

### Descriptions of the Related Art

Bicycles have become more of a means for recreation and physical exercise, rather than merely for transportation. As a result, the demands on the bicycle have increased accordingly. Aside from the weight and the profile of the bicycle, the comfort of the saddle has also become an important purchasing factor. The two most important factors that determine the quality of the saddle are the ventilation and cushioning capability against various external forces during the ride. These two factors improve the comfort and health of the cyclist, regardless of the gender. Furthermore, these are also the two factors on which saddle designers seek to improve sport apparatuses (for example but not limited to bicycles) used for various purposes (racing, recreation, children playing).

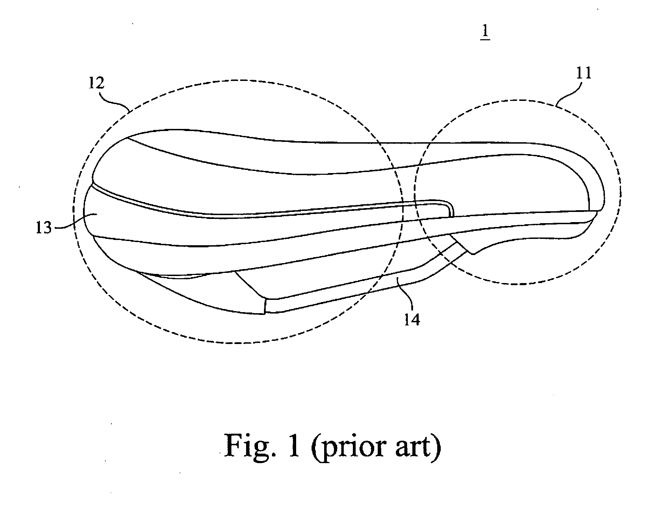

To provide the desired cushioning effect, a conventional saddle **1** as depicted in **FIG. 1** comprises a crotch portion **11,** a buttock portion **12,** an air bag **13** and a rail **14.** The saddle **1** interfaces with the body of the bicycle via the rail **14,** and the buttocks of the cyclist seat on the buttock portion **12** during the ride. By disposing the air bag **13** in the buttock portion **12,** the saddle **1** provides an adequate cushioning capability. Unfortunately, the saddle **1** fails to provide adequate ventilation, causing a stuffy and damp feeling in the crotch area. This makes it difficult for the cyclist to ride a bicycle for an extended period of time and also pose a threat to the health of the cyclist.

A seat cover having ventilating grooves is known from the document J-A-2001 1715 74.

In view of this, it is highly desirable in the field to provide a saddle assembly with favorable cushioning capability and ventilation effect, as well as a venting device thereof.

### SUMMARY OF THE INVENTION

One objective of this invention is to provide a saddle assembly and a venting device thereof with a favorable ventilation effect and cushioning capability.

According to the present invention, a venting device of a saddle assembly as claimed in claim 1 is provided. A saddle assembly according to the present invention is claimed in claim 8 or claim 16. The sub-claims are directed to some examples of such a device or saddle assembly, respectively.

This invention provides innovative research and design on the venting device of a saddle assembly. The venting device comprises a body and an air-passage structure. The body has an upper surface and a peripheral portion. The air-passage structure is at least partially formed on the upper surface and in fluid communication with at least one portion of the peripheral portion. The venting device may be optionally (but not limited to) made of a shock-absorbing material. The saddle assembly of this invention at least comprises the venting device, a pad device and a fastening device, which may be entirely or partially formed integrally. The pad device is disposed on the venting device, and the fastening device is disposed between the venting device and the pad device to fasten the pad device on the venting device.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of a conventional saddle;
**FIG 2** is a side assembled view of a saddle assembly of this invention;
**FIG. 3** is a top view of a venting device of this invention;
**FIG. 4** is an exploded top view of a saddle assembly of this invention;
**FIG. 5** is an exploded bottom view of a saddle assembly of this invention;
**FIG. 6** is a side cross-sectional exploded view of a saddle assembly of this invention; and
**FIG. 7** is a side cross-sectional assembled view of a saddle assembly of this invention.

### DESCRIPTION OF THE PREFERRED EMBODIMENT

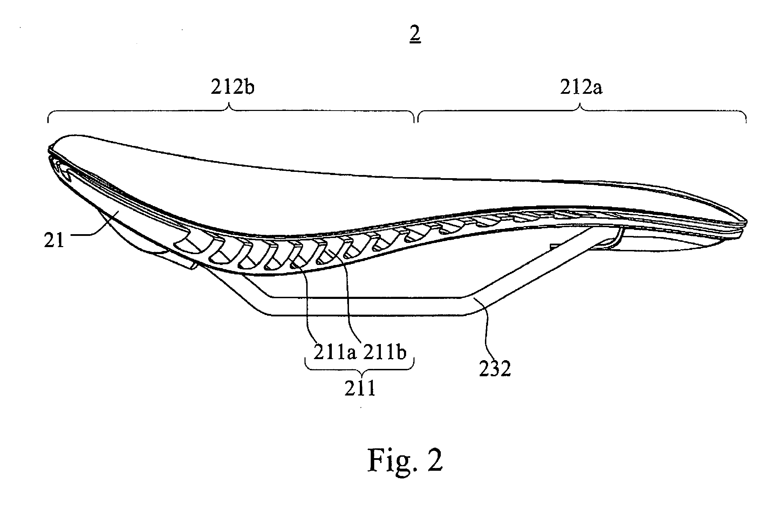

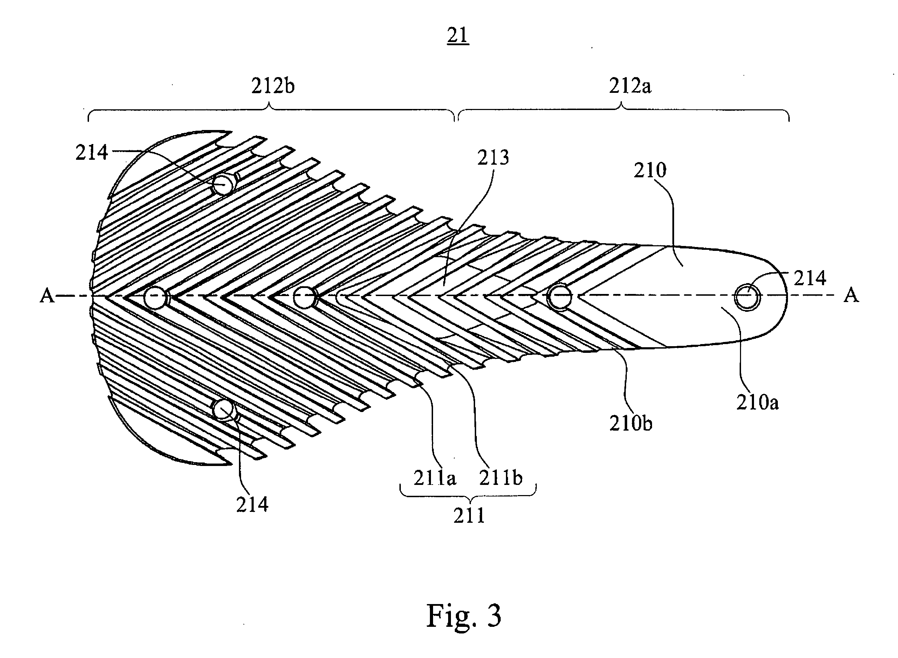

As depicted in **FIG. 2**, a saddle assembly **2** of this invention has a venting device **21** disposed therein. By disposing an air-passage structure **211,** the saddle structure **2** has a favorable ventilation and cushioning capability. **FIG. 3** depicts the detailed structure of the venting device **21,** which comprises a body **210** and an air-passage structure **211.** The body **210,** which has substantially a same profile as the saddle assembly **2,** comprises a crotch portion **212a** and a buttock portion **212b** at a rear portion of the crotch portion **212a.** The air-passage structure **211** is at least partially formed on a top surface **210a** of the body **210** and in fluid connection with at least one portion of a peripheral portion **210b** of the body **210.** Moreover, the air-passage structure **211** is configured to cover at least one portion of the buttock portion **212b** and the crotch portion **212a.** In this way, the ambient air is allowed to flow from the peripheral portion **210b** through the air-passage structure **211** into the saddle assembly **2.**

Preferably, the air-passage structure **211** comprises a plurality of ribs **211a.** The plurality of ribs **211a** are substantially parallel to and extend upwards from the top surface **210a** of the body **210** to correspondingly form the plurality of air passages **211b,** so that ambient air is allowed to flow from the peripheral portion **210b** through the air passages **211b** into the saddle assembly **2.** Each of the ribs **211a** substantially extends to the peripheral portion **210b** symmetrically with respect to a center line A of the body **210** to form V-shape configurations with the angles pointed towards the rear of the saddle assembly **2** to force the ambient air to flow backwards into the saddle assembly **2** from the front during the ride. Furthermore, the venting device **21** is preferably made of a shock-absorbing material that is moderately elastically deformable to provide the venting device **21** with a desirable cushioning capability by virtue of deformation of the ribs **211a** during the ride. The elastic deformation of the ribs **211a** tends to change the shape and volume of the air passages **211b** between the ribs **211a** and forces the air to flow more smoothly inside the air passages **211b,** thus enhancing the venting performance of the venting device **21.**

It should be noted that since the shock-absorbing material for the venting device **21** may be either used alone or combined with other materials at the top or bottom to enhance the cushioning effect, materials with a soft or hard touching sense may be adopted in practice. In particular, this material may be selected from the group consisting of foam materials (optionally, either partially or completely foamed), Silica Gel, Ethylene-vinyl Acetate (EVA), Poly Urethane (PU), Thermo Plastic Rubber (TPR) and the combination thereof, any of which may provide the air-passage structure with the appropriate hardness and elasticity and provide necessary support, shock absorption and heat dissipation.

As depicted in **FIG. 3****,** the body **210** further comprises at least one through-hole **213** for fluidly connecting an upside and a downside of the body **210.** The at least one through-hole **213** is at least formed in the crotch portion **212a** to allow air to flow in the air passages **211b** as well as the upside and the downside of the body **210** to enhance the ventilation of the saddle assembly **2** as a whole. If the saddle assembly **2** is comprised of a plurality of elements in combination, the body **210** may comprise a plurality of connecting holes **214** for fastening the venting device **21** with peripheral elements to construct the saddle assembly **2.**

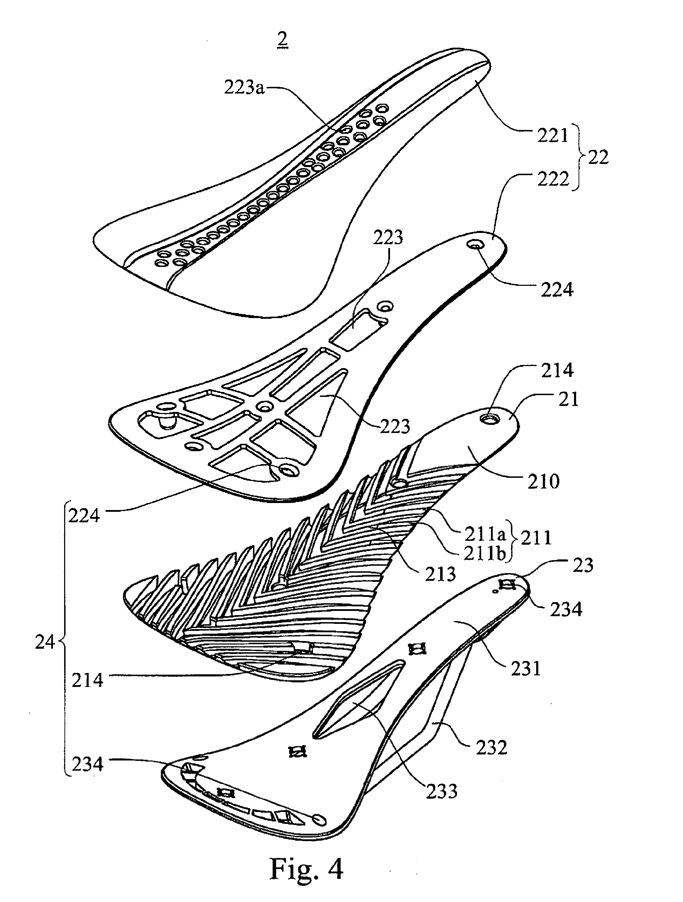

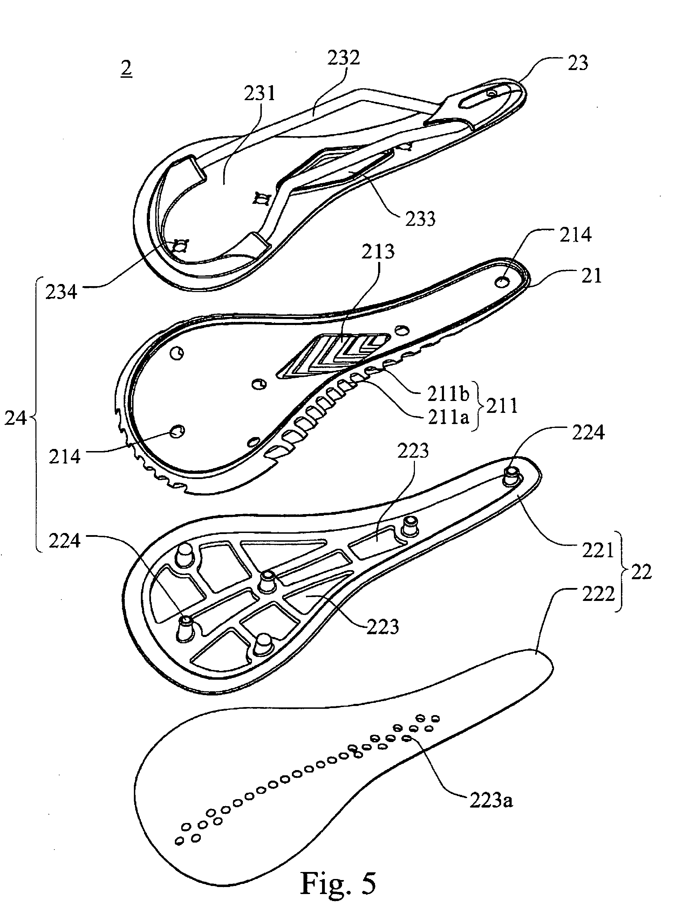

As shown in **FIGS. 4** and **5****,** the saddle assembly **2** of this embodiment consists of a plurality of elements, including the venting device **21,** a pad device **22,** a supporting device **23,** and a fastening device **24** interposed therebetween for fastening these elements with each other.

The supporting device **23** is disposed under the venting device **21** and has substantially the same profile as the body **210.** The supporting device **23** is primarily comprised of a base **231** and includes a rail device **232** fastened to a lower surface of the base **231.** The rail device **232** is adapted to interface with the body of the bicycle to fasten the saddle assembly **2** on the bicycle body. The base **231** may be made of a plastic material with a certain strength or a carbon fiber reinforced material.

The pad device **22,** which is disposed on the venting device **21,** provides an ergonomic surface for properly supporting the buttocks and crotches of the cyclists. In this embodiment, the pad device **22** comprises a foam layer **221** and a fastening layer **222,** all with substantially the same profile as the body **210** of the venting device **21.** The fastening layer **222** is fixedly disposed under the foam layer **221,** while a male connecting device **224** extends downwards from the fastening layer **222.** The fastening layer **222** has at least one hollowed portion **223.** The foam layer **221** may have a plurality of fine pores **223a.** With such an arrangement, air is allowed to flow through the plurality of air passages **211b** of the venting device **21,** the hollowed portion **223** of the fastening layer **222,** the foam layer **221,** and the fine pores **223a** of the foam layer **221** to an upside of the saddle assembly **2.** The foam layer **221** and the fastening layer **222** are enclosed and fastened by a breathable layer (not shown) disposed on the foam layer **221** to form a complete pad device **22** which allows comfortable riding over a long period of time and provides adequate support. The fastening layer **222** may be made of various plastic materials or carbon fiber reinforced materials to provide adequate support, while the breathable layer may be made of various textiles, breathable leathers or other breathable materials to provide an appropriate heat dissipation passage directed upwards.

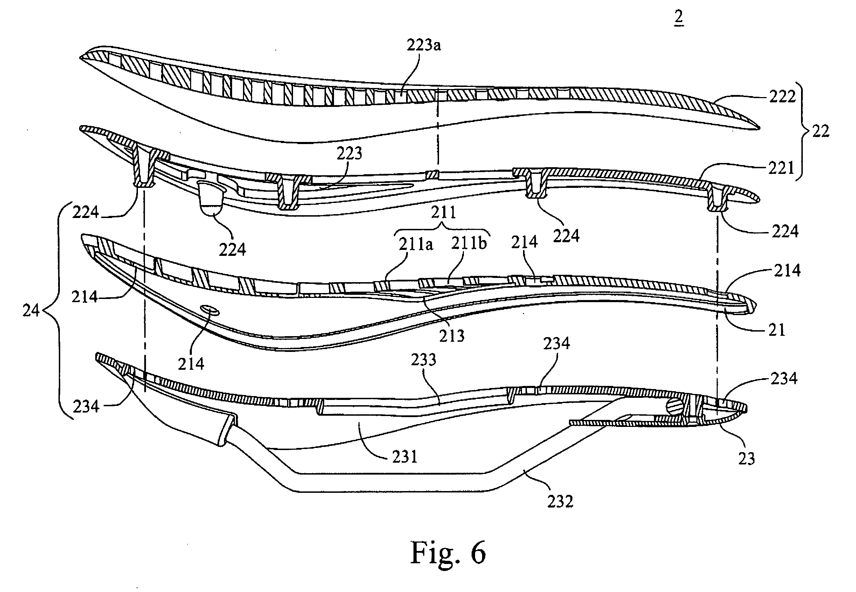

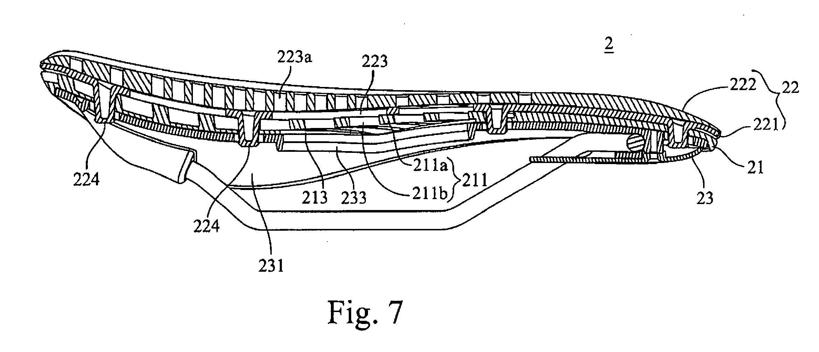

As shown in both **FIGS. 6** and **7****,** the fastening device **24** is disposed between the venting device **21** and the pad device **22** to fasten the pad device **22** on the venting device **21** and further fasten the base of the supporting device **23** under the venting device **21.** In this embodiment, the fastening device **24** comprises a male connecting device **224** and a female connecting device. The male connecting device **224** extends downwards from the pad device **22,** while the female connecting device comprises a plurality of connecting holes **214, 234** correspondingly formed on the venting device **21** and the base of the supporting device **23** for the insertion of the male connecting device **224.** The male connecting device **224** of this embodiment comprises a plurality of nuts and a plurality of screws adapted to be screwed into these nuts, while the female connecting device comprises a plurality of connecting holes **214, 234** correspondingly formed on the venting devices **21** and the base **231** of the supporting device **23.** In this way, by screwing the plurality of screws into the nuts through the connecting holes, the venting device **21,** the pad device **22** and the supporting device **23** are fastened together. However, in other embodiments, the fastening device **24** may also fasten the venting device **21,** the pad device **22** and the supporting device **23** by other permanent or detachable means such as snap fitting, riveting, gluing or hot gluing. However, these equivalent substitutions are not related to the core technology of this invention and still fall within the scope of the claims of this invention.

The air flow path inside the saddle assembly **2** will be further described. As shown in **FIGS. 2****,** **6** and **7****,** air is adapted to flow from the side of the saddle assembly **2** through the air passages **211b** of the air-passage structure **211,** the through-hole **213,** the hollowed portion **223** of the fastening layer **222,** the foam layer **221** and the fine pores **223a** of the foam layer **221,** and then escape upwards from the breathable layer. Furthermore, the through-hole **213** in the body **210** of the venting device **21** corresponds to an opening **233** in the base **231** of the supporting device **23,** so it is further adapted for air to flow from a downside of the saddle assembly **2** through the through-hole **213** of the venting device **21,** the opening **233** of the supporting device **23,** the hollowed portion **223** of the fastening layer **221** and the foam layer **221** and the fine pores **223a** of the foam layer **221,** and then escape upwards from the breathable layer. This provides the saddle assembly **2** with favorable ventilation performance, which, in combination with the elastic deformation of the shock-absorbing material forming the venting device **21,** will provide adequate cushioning effect for the cyclists and further introduce dynamic deformation in the air passages **211b** to force air being breathed-in and breathed-out the saddle assembly **2** of this invention. Therefore, the venting device 21 is adapted to keep the crotch and the buttocks dry and provide the rider with comfort over a long period of time.

In the above embodiment, the saddle assembly **2** of this invention is primarily comprised of the foam layer **221** of the pad device **22,** the fastening layer **222** of the pad device **22,** the venting device **21** and the supporting device **23.** However, in other embodiments, these devices may be partially or entirely integrated together. For example, instead of being comprised of the foam layer **221** and the fastening layer **222,** the pad device **22** may be formed integrally of a carbon fiber reinforced material. In this case, the pad device **22** can be assembled into the saddle assembly **2** by simply having the male connecting device **224** of the fastening device **24** correspondingly formed on the lower surface of the integrally formed pad device; and by forming a plurality of venting pores or hollowed portions in the pad device **22,** the pad device **22** can cooperate with the venting device **21** and the supporting device **23** to achieve the desirable ventilation effect. Similarly, if both the venting device **21** and the base **231** of the supporting device **23** are also made of a shock-absorbing material, a single-piece device may be formed integrally. However, in order for the resulting single-piece device to have sufficient supporting ability to connect the bicycle body and support weight of the cyclist, this material may be selected from materials with both an adequate strength and an adequate cushioning capability such as poly urethane (PU) or thermal plastic rubber. In case these devices are highly integrated, the saddle assembly **2** as a whole can further be formed into a single-piece of materials also with both an adequate strength and an adequate cushioning capability such as polyurethane (PU) or thermal plastic rubber. Hence, any other saddles incorporating similar ribs **211a** or air passages **211b** of the air-passage structure **211** of this invention can accomplish the basic objective of favorable ventilation performance of this invention. Moreover, in case the air-passage structure **211** is made of a shock-absorbing material, a favorable cushioning capability can further be obtained. Therefore, all these embodiments shall fall within scope of the claims of this invention.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A venting device for a saddle assembly (2) for a bicycle, comprising:
a body (210) having an upper surface and a peripheral portion (210b); and
an air-passage structure (211), comprising a plurality of parallel ribs (211a) substantially extending upward from the upper surface of the body (210) to correspondingly form a plurality of air passages, at least partially formed on the upper surface and fluidly connecting at least one portion of the peripheral portion (210b);
wherein the body (210) and the air-passage structure (211) are integrally made of a shock-absorbing material, and each of the ribs (211 a) substantially extends to the peripheral portion (210b) symmetrically with respect to a center line of the body (210) to form V-shape configurations.

2. The venting device as claimed in claim 1, wherein the body (210) has a substantially same profile as the saddle assembly (2).

3. The venting device as claimed in claim 2, wherein the body (210) has a crotch portion (212a) and a buttock portion (212b) at a rear portion of the crotch portion (212a), and the air-passage structure (211) is configured to cover at least one portion of the crotch portion (212a) and the buttock portion (212b).

4. The venting device as claimed in claim 1, wherein the shock-absorbing material is selected from the group of foam material, Silica Gel, Ethylene-vinyl Acetate (EVA), Poly Urethane (PU), Thermo Plastic Rubber (TPR) and the combination thereof.

5. The venting device as claimed in claim 1, wherein the body (210) comprises at least one through hole (213) for fluidly connecting an upside and a downside of the body (210), and the at least one through hole (213) is formed in a crotch portion (212a).

6. The venting device as claimed in claim 1, wherein the body (210) comprises a plurality of connecting holes (214) for fastening the venting device (21) with peripheral elements to assemble the saddle assembly (2).

7. A saddle assembly for a bicycle, comprising:
a venting device (21) having:
a body (210), having an upper surface and a peripheral portion (210b); and
an air-passage structure (211), comprising a plurality of parallel ribs (21a) substantially extending upward from the upper surface of the body (210) to correspondingly form a plurality of air passages, at least partially formed on the upper surface and fluidly connecting at least one portion of the peripheral portion (210b);
a pad device disposed on the venting device (21); and
a fastening device disposed between the venting device (21) and the pad device to fasten the pad device on the venting device (21);
wherein the body (210) and the air-passage structure (211) are integrally made of a shock-absorbing material, and each of the ribs (211 a) substantially extends to the peripheral portion (210b) symmetrically with respect to a center line of the body (210) to form V-shape configurations.

8. The saddle assembly as claimed in claim 7, further comprising a supporting device (23), disposed under the venting device (21) and having a substantially same profile as the body (210).

9. The saddle assembly as claimed in claim 8, wherein the supporting device (23) comprises a base (231) and a rail device (232) fastened to a lower surface of the base (231), and the fastening device further fastens the base (231) under the venting device (21).

10. The saddle assembly as claimed in claim 5, wherein the fastening device comprises a male connecting device and a female connecting device, the male connecting device extends downward from the pad device, and the female connecting device is formed correspondingly on the venting device (21) and the base (231) of the supporting device (23) for embedment of the male connecting device.

11. The saddle assembly as claimed in claim 10, wherein the male connecting device comprises a plurality of nuts and a plurality of screws adapted to be screwed into these nuts, and the female connecting device comprises a plurality of connecting holes (214) correspondingly formed on the venting device (21) and the base (231) of the supporting device (23).

12. The saddle assembly as claimed in claim 11, wherein the pad device is integrally made of a Carbon Fiber Reinforced material.

13. The saddle assembly as claimed in claim 11, wherein the pad device comprises:
a foam layer (221) having a substantially same profile as the body (210);
a fastening layer (222), having a substantially same profile as the body (210), disposed under the foam layer (221), the male connecting device extending downward from the fastening layer (222), and the fastening layer (222) having at least one hollowed portion (223); and
a breathable layer, disposed on the foam layer (221), enclosing and fastening the foam layer (221) and the fastening layer (222) and configured for the upward dissipation of air flowing from a side of the saddle assembly (2) through the air-passage structure (211), the hollowed portion (223) of the fastening layer (222), the foam layer (221) and the breathable layer.

14. The saddle assembly as claimed in claim 13, wherein the body (210) of the venting device (21) comprises at least one through hole (213) and the base (231) of the supporting device (23) correspondingly comprises at least one open hole for the upward dissipation of air flowing from a downside of the saddle assembly (2) through the at least one open hole, the at least one through hole (213), the hollowed portion (223) of the fastening layer (222), the foam layer (221) and the breathable layer.

15. A saddle assembly for a bicycle, comprising:
a venting device (21) having:
a body (210), having an upper surface and a peripheral portion (210b); and
an air-passage structure (211), comprising a plurality of parallel ribs (211a) substantially extending upward from the upper surface of the body (210) to correspondingly form a plurality of air passages, at least partially formed on the upper surface and fluidly connecting at least one portion of the peripheral portion (210b); and
a pad device disposed on the venting device (21);
wherein the pad device and the venting device (21) are formed integrally, and wherein the body (210) and the air-passage structure (211) are integrally made of a shock-absorbing material, and each of the ribs (211a) substantially extends to the peripheral portion (210b) symmetrically with respect to a center line of the body (210) to form V-shape configuratios.

## Patentansprüche

1. Belüftungsvorrichtung für eine Sattelanordnung (2) für ein Fahrrad, umfassend:
einen Körper (210), der eine obere Oberfläche und einen peripheren Bereich (210b) aufweist, und
eine Struktur für einen Luftdurchgang (211), die mehrere parallele Rippen (211a) umfasst, die sich im Wesentlichen von der oberen Oberfläche des Körpers (210) nach oben erstrecken, um entsprechend mehrere Luftdurchgänge zu bilden, die mindestens teilweise an der oberen Oberfläche gebildet sind und mindestens mit einem Bereich des peripheren Bereichs (210b) in fluider Verbindung stehen,
worin der Körper (210) und die Struktur für einen Luftdurchgang (211) einstückig aus einem stoßdämpfenden Material hergestellt sind, und worin sich jede der Rippen (211a) mit Bezug auf eine Mittellinie des Körpers (210) im Wesentlichen zu dem peripheren Bereich (210b) symmetrisch erstreckt, um V-förmige Konfigurationen zu bilden.

2. Belüftungsvorrichtung nach Anspruch 1, worin der Köper (210) ein im Wesentlichen gleiches Profil wie die Sattelanordnung (2) aufweist.

3. Belüftungsvorrichtung nach Anspruch 2, worin der Körper (210) einen Weichteilbereich (212a) und einen Gesäßbackenbereich (212b) an einem hinteren Bereich des Weichteilbereichs (212a) aufweist, und worin die Struktur für einen Luftdurchgang (211) so konfiguriert ist, dass mindestens ein Bereich des Weichteilbereichs (212a) und des Gesäßbackenbereichs (212b) abgedeckt sind.

4. Belüftungsvorrichtung nach Anspruch 1, worin das stoßdämpfende Material ausgewählt ist aus der Gruppe von Schaummaterial, Silikagel, Ethylenvinylazetat (EVA), Polyurethan (PU), thermoplastischem Gummi (TPR) und der Kombination davon.

5. Belüftungsvorrichtung nach Anspruch 1, worin der Körper (210) mindestens ein Durchgangsloch (213) umfasst, um mit einer Oberseite und einer Unterseite des Körpers (210) in fluider Verbindung zu stehen, und worin das Durchgangsloch (213) in einem Weichteilbereich (212a) ausgebildet ist.

6. Belüftungsvorrichtung nach Anspruch 1, worin der Körper (210) mehrere Verbindungslöcher (214) umfasst, um die Belüftungsvorrichtung (21) an peripheren Elementen zu befestigen, um die Sattelanordnung (2) zusammenzusetzen.

7. Sattelanordnung für ein Fahrrad, umfassend:
eine Belüftungsvorrichtung (21) aufweisend:
einen Körper (210), der eine obere Oberfläche und einen peripheren Bereich (210b) aufweist, und
eine Struktur für einen Luftdurchgang (211), die mehrere parallele Rippen (211a) umfasst, die sich im Wesentlichen von der oberen Oberfläche des Körpers (210) nach oben erstrecken, um entsprechend mehrere Luftdurchgänge zu bilden, die mindestens teilweise an der oberen Oberfläche gebildet sind und mindestens mit einem Bereich des peripheren Bereichs (210b) in fluider Verbindung stehen,
eine Auflagervorrichtung, die auf der Belüftungsvorrichtung (21) angeordnet ist, und
eine Befestigungsvorrichtung, die zwischen der Belüftungsvorrichtung (21) und der Auflagervorrichtung angeordnet ist, um die Auflagervorrichtung an der Belüftungsvorrichtung (21) zu befestigen,
worin der Körper (210) und die Struktur für einen Luftdurchgang (211) einstückig aus einem stoßdämpfenden Material hergestellt sind, und worin sich jede der Rippen (211a) mit Bezug auf eine Mittellinie des Körpers (210) im Wesentlichen zu dem peripheren Bereich (210b) symmetrisch erstreckt, um V-förmige Konfigurationen zu bilden.

8. Sattelanordnung nach Anspruch 7, weiter umfassend eine Stützvorrichtung (23), die unter der Belüftungsvorrichtung (21) angeordnet ist und ein im Wesentlichen gleiches Profil wie der Körper (210) aufweist.

9. Sattelanordnung nach Anspruch 8, worin die Stützvorrichtung (23) eine Basis (231) und eine Schienenvorrichtung (232) umfasst, die an einer unteren Oberfläche der Basis (231) befestigt ist, und worin die Befestigungsvorrichtung weiterhin die Basis (231) unter der Belüftungsvorrichtung (21) befestigt.

10. Sattelanordnung nach Anspruch 9, worin die Befestigungsvorrichtung eine männliche Verbindungsvorrichtung und eine weibliche Verbindungsvorrichtung umfasst, worin sich die männliche Verbindungsvorrichtung von der Auflagevorrichtung nach unten erstreckt, und worin die weibliche Verbindungsvorrichtung entsprechend an der Belüftungsvorrichtung (21) und der Basis (231) der Stützvorrichtung (23) ausgebildet ist, um die männliche Verbindungsvorrichtung aufzunehmen.

11. Sattelvorrichtung nach Anspruch 10, worin die männliche Verbindungsvorrichtung mehrere Gewindemuttern und mehrere Schrauben umfasst, die angepasst sind, in die Gewindemuttern geschraubt zu werden, und worin die weibliche Verbindungsvorrichtung mehrere Verbindungslöcher (214) umfasst, die an der Belüftungsvorrichtung (21) und der Basis (231) der Stützvorrichtung (23) entsprechend ausgebildet sind.

12. Sattelanordnung nach Anspruch 11, worin die Auflagervorrichtung aus einem aus Kohlenstofffasern verstärkten Material einstückig hergestellt ist.

13. Sattelanordnung nach Anspruch 11, worin die Auflagervorrichtung umfasst:
eine Schaumschicht (221), die ein im Wesentlichen gleiches Profil wie der Körper (210) aufweist,
eine Befestigungsschicht (222), die ein im Wesentlichen gleiches Profil wie der Körper (210) aufweist, die unter der Schaumschicht (221) angeordnet ist, worin sich die männliche Verbindungsvorrichtung von der Befestigungsschicht (222) nach unten erstreckt, und worin die Befestigungsschicht (222) mindestens einen ausgehöhlten Bereich (223) aufweist, und
eine atmungsaktive Schicht, die an der Schaumschicht (221) angeordnet ist, und die die Schaumschicht (221) und die Befestigungsschicht (222) umschließt und befestigt und für die nach oben gerichtete Ableitung der Luft, die von einer Seite der Sattelanordnung (2) durch die Struktur des Luftdurchgangs (211), den ausgehöhlten Bereich (223) der Befestigungsschicht (222), die Schaumschicht (221) und die atmungsaktive Schicht strömt, konfiguriert ist.

14. Sattelanordnung nach Anspruch 13, worin der Körper (210) der Belüftungsvorrichtung (21) mindestens ein Durchgangsloch (213) umfasst, und worin die Basis (231) der Stützvorrichtung (23) entsprechend mindestens ein offenes Loch für die nach oben gerichtete Ableitung der Luft umfasst, die von einer Unterseite der Sattelanordnung (2) durch das mindestens eine offene Loch, das mindestens eine Durchgangsloch (213), den ausgehöhlten Bereich (223) der Befestigungsschicht (222), die Schaumschicht (221) und die atmungsaktive Schicht strömt.

15. Sattelanordnung für ein Fahrrad, umfassend:
eine Belüftungsvorrichtung (21), aufweisend:
einen Körper (210), der eine obere Oberfläche und einen peripheren Bereich (210b) aufweist, und
eine Struktur für einen Luftdurchgang (211), die mehrere parallele Rippen (211 a) umfasst, die sich im Wesentlichen von der oberen Oberfläche des Körpers (210) nach oben erstrecken, um entsprechend mehrere Luftdurchgänge zu bilden, die mindestens teilweise an der oberen Oberfläche gebildet sind und mindestens mit einem Bereich des peripheren Bereichs (210b) in fluider Verbindung stehen, und
eine Auflagervorrichtung, die auf der Belüftungsvorrichtung (21) angeordnet ist,
worin die Auflagervorrichtung und die Belüftungsvorrichtung (21) einstückig ausgebildet sind, und worin der Körper (210) und die Struktur für einen Luftdurchgang (211) aus einem stoßdämpfenden Material einstückig hergestellt sind, und worin sich jede der Rippen (211 a) mit Bezug auf eine Mittellinie des Körpers (210) im Wesentlichen zu dem peripheren Bereich (210b) symmetrisch erstreckt, um V-förmige Konfigurationen zu bilden.

## Revendications

1. Un dispositif d'aération pour un ensemble de selle (2) de bicyclette comprenant :
un corps (210) comportant une surface supérieure et une portion périphérique (210b) ; et
une structure de passage d'air (211) comprenant une pluralité de nervures parallèles (211a) s'étendant essentiellement vers le haut à partir de la surface supérieure du corps (210) pour former une pluralité de passages d'air correspondants formés au moins en partie sur la surface supérieure et se connectant par fluide à au moins une partie de la portion périphérique (210b) ;
dans lequel le corps (210) et la structure de passage d'air (211) sont entièrement faits d'un matériau absorbant les chocs et chacune des nervures (211a) s'étend essentiellement vers la porion périphérique (210b), symétriquement par rapport à une ligne centrale du corps (210) pour former des configurations en V.

2. Le dispositif d'aération tel que revendiqué dans la revendication 1 dans lequel le corps (210) a un profil sensiblement le même que l'ensemble de selle (2).

3. Le dispositif d'aération tel que revendiqué dans la revendication 2 dans lequel le corps (210) comporte une portion d'entrejambe (212a) et une portion de fessier (212b) sur une portion arrière de la portion d'entrejambe (212a) et la structure de passage d'air (211) est configurée pour couvrir au moins une partie de la portion d'entrejambe (212a) et la portion de fessier (212b).

4. Le dispositif d'aération tel que revendiqué dans la revendication 1 dans lequel le matériau absorbeur de chocs est sélectionné à partir du groupe de matériau mousse, Silica Gel, éthylène vinyle acétate (EVA), polyuréthane (PU), caoutchouc thermoplastique et la combinaison de ceux-ci.

5. Le dispositif d'aération tel que revendiqué dans la revendication 1 dans lequel le corps (210) comprend au moins un passage creux (213) pour connecter par fluide une face supérieure et une face inférieure du corps (210) et le au moins un passage creux (213) est formé dans une portion d'entrejambe (212a).

6. Le dispositif d'aération tel que revendiqué dans la revendication 1 dans lequel le corps (210) comprend une pluralité de trous de connexion (214) pour fixer le dispositif d'aération (21) à des éléments périphériques pour assembler l'ensemble de selle (2).

7. Un ensemble de selle pour bicyclette comprenant un dispositif d'aération (21) comportant :
un corps (210) ayant une surface supérieure et une portion périphérique (210b) ; et
une structure de passage d'air (211) comprenant une pluralité de nervures parallèles (211a) s'étendant essentiellement vers le haut à partir de la surface supérieure du corps (210) pour former une pluralité de passages d'air correspondants formés au moins en partie sur la surface supérieure et se connectant par fluide à au moins une partie de la portion périphérique (210b) ;
un dispositif de rembourrage disposé sur le dispositif d'aération (21) ; et
un dispositif de fixation disposé entre le dispositif d'aération (21) et le rembourrage pour fixer le dispositif de rembourrage au dispositif d'aération (21) ;
dans lequel le corps (210) et la structure de passage d'air (211) sont entièrement faits d'un matériau absorbant les chocs et chacune des nervures (211a) s'étend essentiellement vers la porion périphérique (210b), symétriquement par rapport à une ligne centrale du corps (210) pour former des configurations en V.

8. L'ensemble de selle tel que revendiqué dans la revendication 7 comprenant en outre un dispositif porteur (23) disposé sous le dispositif d'aération (21) et ayant un profil sensiblement le même que le corps (210).

9. L'ensemble de selle tel que revendiqué dans la revendication 8 dans lequel le dispositif porteur (23) comprend une base (231) et un dispositif de rail (232) fixé à une face inférieure de la base (231) et le dispositif de fixation fixe en outre la base (231) sous le dispositif d'aération (21).

10. L'ensemble de selle tel que revendiqué dans la revendication 9 dans lequel le dispositif de fixation comprend un dispositif de connexion mâle et un dispositif de connexion femelle, le dispositif de connexion mâle s'étend vers le bas à partir du dispositif de rembourrage, et le dispositif de connexion femelle est formé de manière correspondante sur le dispositif d'aération (21) et la base (231) du dispositif porteur (23) pour l'encastrement du dispositif de connexion mâle.

11. L'ensemble de selle tel que revendiqué dans la revendication 10 dans lequel le dispositif de connexion mâle comprend une pluralité d'écrous et de vis adaptées pour se visser dans ces écrous et le dispositif de connexion femelle comprend une pluralité de trous de connexion (214) formés de manière correspondante sur le dispositif d'aération (21) et la base (231) du dispositif porteur (23).

12. L'ensemble de selle tel que revendiqué dans la revendication 11 dans lequel le dispositif de rembourrage est entièrement fait d'un matériau renforcé en fibres de carbone.

13. L'ensemble de selle tel que revendiqué dans la revendication 11 dans lequel le dispositif de rembourrage comprend :
une couche de mousse (221) ayant un profil sensiblement le même que le corps (21) ;
une couche de fixation (222) ayant un profil sensiblement le même que le corps (21) disposée sous la couche de mousse (221), le dispositif de fixation mâle s'étendant vers le bas à partir de la couche de fixation (222) et la couche de fixation (222) comporte au moins une portion creuse (223) ; et
une couche perméable à l'air disposée sur la couche de mousse (221) enfermant et fixant la couche de mousse (221) et la couche de fixation (222) et configurée pour la dissipation vers le haut de l'air s'écoulant d'un côté de l'ensemble de selle (2) au travers de la structure de passage d'air (211), de la portion creusée (223) de la couche de fixation (222), de la couche de mousse (221) et de la couche perméable à l'air.

14. L'ensemble de selle tel que revendiqué dans la revendication 13 dans lequel le corps (210) du dispositif d'aération (21) comprend au moins un trou (213) et la base (231) du dispositif porteur (23) comprend de manière correspondante au moins trou ouvert pour la dissipation vers le haut de l'air s'écoulant d'un côté inférieur de l'ensemble de selle (2) au travers du au moins un trou ouvert, du au moins un trou (213), de la portion creusée (223) de la couche de fixation (222), de la couche de mousse (221) et de la couche perméable à l'air.

15. Un ensemble de selle pour bicyclette comprenant un dispositif d'aération (21) comprenant :
un corps (210) ayant une surface supérieure et une portion périphérique (210b) ; et
une structure de passage d'air (211) comprenant une pluralité de nervures parallèles (211a) s'étendant essentiellement vers le haut à partir de la surface supérieure du corps (210) pour former de manière correspondante une pluralité de passages d'air formés au moins en partie sur la surface supérieure et se connectant par fluide à au moins une partie de la portion périphérique (210b) ; et
un dispositif de rembourrage disposé sur le dispositif d'aération (21) ;
dans lequel le dispositif de rembourrage et le dispositif d'aération (21) forment un tout dans lequel le corps (210) et la structure de passage d'air (211) sont entièrement faits d'un matériau absorbant les chocs et chacune des nervures (211a) s'étend essentiellement vers la porion périphérique (210), symétriquement par rapport à une ligne centrale du corps (210) pour former des configurations en V.
